(19) Europäisches Patentamt
European Patent Office
Office européen des brevets

(11) **EP 3 542 445 B1**

(12) **EUROPÄISCHE PATENTSCHRIFT**

(45) Veröffentlichungstag und Bekanntmachung des Hinweises auf die Patenterteilung:
**25.08.2021   Patentblatt 2021/34**

(21) Anmeldenummer: **17771383.1**

(22) Anmeldetag: **13.09.2017**

(51) Int Cl.:
**H02K 1/27** *(2006.01)*

(86) Internationale Anmeldenummer:
**PCT/EP2017/073000**

(87) Internationale Veröffentlichungsnummer:
**WO 2018/091164 (24.05.2018 Gazette 2018/21)**

(54) **OPTIMIERTE ELEKTRISCHE MASCHINE**

OPTIMIZED ELECTRICAL MACHINE

MACHINE ÉLECTRIQUE OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2016   DE 102016222398**

(43) Veröffentlichungstag der Anmeldung:
**25.09.2019   Patentblatt 2019/39**

(73) Patentinhaber: **Robert Bosch GmbH**
**70442 Stuttgart (DE)**

(72) Erfinder:
• **KREMER, Mickael**
**70806 Kornwestheim (DE)**
• **TABARELLI, Sebastian**
**70372 Stuttgart (DE)**
• **RIEDL, Johannes**
**81369 Muenchen (DE)**

(56) Entgegenhaltungen:
**DE-A1-102015 203 012     JP-A- 2008 306 849**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gebiet der Erfindung

Die Erfindung betrifft eine elektrische Maschine, wie etwa einen Elektromotor oder einen Generator.

Stand der Technik

Der Einsatz von permanenterregten Synchronmaschinen bei nicht-aufladbaren und aufladbaren Hybridfahrzeugen ist weit verbreitet. Bei in den Verbrennungsmotor integrierten Synchronmaschinen werden häufig Rotoren mit zwei V-förmig angeordneten Magneten pro Pol verwendet.

Die Optimierung derartiger elektrischen Maschinen fordert widersprechende Optimierungsziele. Für Traktionsantriebe in der Elektromobilität werden hohe Drehmoment- bzw. Leistungsdichten gefordert. Parallel dazu müssen die Kosten, der Bauraum, die Verluste, die Drehmomentwelligkeit und das Geräusch minimiert werden.

Die DE 10 2012 219 174 A1 beschreibt beispielsweise, dass für eine elektrische Maschine mit Lochzahl q=2 die Drehmomentwelligkeit minimiert werden kann, wenn der magnetische Öffnungswinkel zwischen 76.2% und 81.6% liegt.

Die EP 2 498 375 A1 zeigt eine elektrische Maschine mit einem Poldeckungsfaktor zwischen 0.45 und 0.55.

Die WO 2006 095 887 A1 zeigt eine elektrische Maschine mit einem Rotor, der Polöffnungen mit Mittelsteg aufweist, und bei der ein Poldeckungsfaktor zwischen 127°el und 140°el vorliegt.

Weiter ist bekannt, bei in den Verbrennungsmotor integrierten Synchron-maschinen einen Stator mit einer Einzelzahnwicklung einzusetzen, die eine Lochzahl q=0.5 aufweist. Diese Wicklungsart minimiert in der Regel die Länge des Wickelkopfs und ermöglicht den Aufbau von Synchronmaschinen mit einer kurzen axialen Länge. Bei q=0.5 enthält das elektromagnetische Feld im Luftspalt zwischen dem Rotor und dem Stator jedoch einen großen Anteil an Oberschwingungen. Das führt zu einer Erhöhung der Rotorverluste und der Temperatur der Magnete. Für längere in den Verbrennungsmotor integrierte Maschinen kann eine Ganzlochwicklung mit beispielsweise einer Lochzahl q=2 eingesetzt werden, was zu einem elektromagnetischen Feld im Luftspalt mit geringerem Oberschwingungsanteil führt. In den Magneten entstehen dann geringere Wirbelstromverluste, wodurch wiederum die Temperatur der Magnete niedriger bleibt und so eine kostengünstigere Magnetklasse eingesetzt werden kann.

Aus der DE102015203012 A1 und der JP2008306849 A sind elektrische Maschinen bekannt, die einen Rotor aufweisen, der innerhalb eines Stators um die Achse der elektrischen Maschine drehbar gelagert ist und axial verlaufende Pole aufweist, wobei in jedem Pol des Rotors zwei Polmagnete mit rechteckigem Querschnitt in einer axial verlaufenden Polöffnung V-förmig zueinander angeordnet sind.

Offenbarung der Erfindung

Vorteile der Erfindung

Um die oben genannten Optimierungsziele zu erreichen, kann eine Multi-Ziel-Optimierung eingesetzt werden. Dabei werden eine große Anzahl von Design-Varianten berechnet und die besten Kombinationen zwischen Geometrieparametern der elektrischen Maschine können identifiziert werden.

Ausführungsformen der vorliegenden Erfindung können in vorteilhafter Weise ermöglichen, elektrische Maschinen bereitzustellen, bei denen viele Eigenschaften wie Verluste, Baukosten, Wirkungsgrad, Drehmomentwelligkeit und Geräusche in Bezug aufeinander optimiert sind.

Ideen zu Ausführungsformen der vorliegenden Erfindung können unter anderem als auf den nachfolgend beschriebenen Gedanken und Erkenntnissen beruhend angesehen werden.

Die Erfindung betrifft eine elektrische Maschine zum Antrieb eines Fahrzeugs, wie etwa eines Pkws, Lkws, Busses usw., insbesondere eines nicht-aufladbaren und aufladbaren Hybridfahrzeugs. Die elektrische Maschine kann eine permanenterregte Synchronmaschine sein und/oder kann eine in den Verbrennungsmotor integrierte Synchronmaschine sein. Beispielsweise kann der Rotor der elektrischen Maschine direkt auf die Antriebswelle eines Verbrennungsmotors montiert sein.

Gemäß der Erfindung umfasst die elektrische Maschine einen Stator mit axial verlaufenden, gleichmäßig um eine Achse der elektrischen Maschine verlaufenden Statornuten, durch die eine Statorwicklung verläuft, und einen Rotor mit axial verlaufenden Polen, der innerhalb des Stators um die Achse der elektrischen Maschine drehbar gelagert ist, wobei in jedem Pol des Rotors zwei Polmagnete mit rechteckigem Querschnitt in einer axial verlaufenden Polöffnung V-förmig zueinander angeordnet sind.

Bei einer Multi-Ziel-Optimierung hat sich gezeigt, dass folgende geometrische Parameter und/oder Baugrößen des Rotors und/oder des Stators einer derartigen elektrischen Maschine zu einer Optimierung einer großen Anzahl von Optimierungszielen bzw. Optimierungsparametern führen, darunter die Erfüllung eines gewünschten Drehmoments bzw. einer gewünschten Drehzahlanforderung, eine Maximierung des Wirkungsgrads, eine Minimierung von Geräuschen, eine Minimierung von Kosten, eine Minimierung einer Drehmomentwelligkeit und eine Minimierung eines Kurzschlussstroms bzw. von Kurzschlussverlusten.

Die elektrische Maschine ist gegenüber einer Vielzahl von geometrischen Parametern optimiert, die durch Optimierung von Optimierungsparametern bzw.

Optimierungszielen, die sich aus den geometrischen Parametern bestimmen, optimiert wurden.

Gemäß der Erfindung beträgt bei dem Rotor: der geometrische Versetzungswinkel der beiden Polmagnete, mit dem die beiden Polmagnete V-förmig zueinander versetzt sind, weniger als 15°; der elektrische

Winkel der äußeren Polbedeckung zwischen 115.7°el. und 133.2°el.; und der elektrische Winkel der inneren Polbedeckung zwischen 123.5°el. und 142.9°el.

Der geometrische Versetzungswinkel der beiden Polmagnete kann dabei als ein Winkel angesehen werden, um den die beiden Magnete zueinander verdreht sind, um zusammen ein V zu bilden.

Ein elektrischer Winkel kann als ein geometrischer Winkel multipliziert mit zweimal einer Anzahl der Pole des Rotors bestimmt werden.

Die äußere Polbedeckung kann durch einen axialen geometrischen Winkel bestimmt werden, den die beiden Polmagnete an einer radial außen liegenden Seite der Polöffnung überdecken. Beispielsweise kann die äußere Polbedeckung mit dem geometrischen Winkel zwischen radial äußeren in Umfangsrichtung außen liegenden Kanten der Polmagnete bestimmt werden.

Die innere Polbedeckung kann durch einen axialen geometrischen Winkel bestimmt werden, den die beiden Polmagnete an einer radial innen liegenden Seite der Polöffnung überdecken. Beispielsweise kann die innere Polbedeckung durch einen axialen geometrischen Winkel zwischen radial innen und in Umfangsrichtung außen liegenden Kanten der Polmagnete bestimmt sein.

Gemäß einer Ausführungsform der Erfindung beträgt bei dem Stator: ein Verhältnis von Zahnhöhe zu Jochdicke zwischen 0.959 und 1.126; ein Verhältnis von Zahnbreite zu Nutbreite am Zahngrund zwischen 1.23 und 1.35 ; ein Verhältnis von Zahnbreite zu Nutbreite am Zahnkopf zwischen 1.03 und 1.14 ; und ein Verhältnis von Nutbreite am Zahngrund zu Nutbreite am Zahnkopf zwischen 0.9 und 1.1 beträgt.

Die Nuten als auch die Zähne (ohne den Zahnkopf) können einen trapezförmigen Querschnitt aufweisen. Die Nuten können einen rechteckigen Querschnitt aufweisen, was bei einer Steckwicklung von Vorteil sein kann, da die gesteckten Leiter in der Regel einen rechteckigen Querschnitt aufweisen.

Die Zahnhöhe ist die radiale Höhe bzw. Dicke, über die sich der ringförmige Teil des Stators erstreckt, der Zähne bzw. Nuten aufweist. Die Jochdicke ist die verbleibende radiale Höhe bzw. Dicke des ringförmigen Teils des Stators (d.h. des Jochs), der keine Zähne und Nuten aufweist. Der Zahngrund befindet sich am Übergang zwischen den Zähnen und dem Joch. Der Zahnkopf ist das Ende eines Zahns, der Richtung Rotor weist und der eventuell T-förmig ausgebildet sein kann. Die Zahnbreite und die Nutbreite werden in Umfangsrichtung bestimmt, wobei die Zahnbreite ohne die T-förmige Verdickung am Zahnkopf bestimmt wird.

Die eben genannten Parameter für den Stator führen in Kombination mit den oben genannten Parametern zu einer besonders optimalen elektrischen Maschine. Jedoch sind auch andere Parameterkombinationen für den Stator möglich, wie die folgenden.

Gemäß einer Ausführungsform der Erfindung, beträgt bei dem Stator: ein Verhältnis von Zahnhöhe zu Jochdicke zwischen 1.395 und 1.6376; ein Verhältnis von Zahnbreite zu Nutbreite am Zahngrund zwischen 1.33 und 1.47; ein Verhältnis von Zahnbreite zu Nutbreite am Zahnkopf zwischen 1.06 und 1.19; und ein Verhältnis von Nutbreite am Zahngrund zu Nutbreite am Zahnkopf zwischen 0.9 und 1.1.

Gemäß einer Ausführungsform der Erfindung beträgt der Statoraußendurchmesser zwischen 110 und 500 mm. Der Statoraußendurchmesser wird von der Drehachse des Rotors zum Außenumfang des Stators bzw. dessen Jochs gemessen.

Gemäß der Erfindung weist die elektrische Maschine eine Lochzahl von größer gleich 1 auf. Die Lochzahl einer elektrischen Maschine kann durch die Anzahl der Nuten im Stator geteilt durch die Anzahl der Phasen und geteilt durch die Anzahl der Pole des Rotors bestimmt werden. Beispielsweise hat eine elektrische Maschine mit drei Phasen und sechs Nuten pro Pol eine Lochzahl von 2.

Bei einer Lochzahl von größer gleich 1, wie beispielsweise 2, kann eine Ganzlochwicklung verwendet werden, die insbesondere als Steckwicklung ausgeführt sein kann. Mit einer Steckwicklung kann beispielsweise der Kupferfüllfaktor zur Reduzierung der Kupferverluste erhöht werden und eine bessere thermische Anbindung zwischen der Wicklung und dem Stator erreicht werden. Außerdem können bei höheren Stückzahlen Kosten gesenkt werden.

Gemäß einer Ausführungsform der Erfindung beträgt ein Verhältnis vom Innendurchmesser zum Außendurchmesser des Stators zwischen 0.75 und 0.85, beispielsweise zwischen 0.80 und 0.85. Der Statorinnendurchmesser wird von der Drehachse des Rotors zum Innenumfang des Stators bzw. dessen Zähnen gemessen.

Gemäß einer Ausführungsform der Erfindung beträgt ein Verhältnis zwischen einer Breite des Luftspalts zwischen dem Stator und dem Rotor und dem Innendurchmesser des Stators zwischen 0.0025 und 0.0055. Zwischen dem Stator und dem Rotor befindet sich ein ringförmiger Bereich, der Luftspalt genannt wird. Die Breite des Luftspalts wird in radiale Richtung bestimmt.

Gemäß einer Ausführungsform der Erfindung beträgt ein Abstand in Umfangsrichtung zwischen zwei Polmagneten eines Pols weniger als 3.0 mm. Falls die beiden Polmagnete nicht durch einen Mittelsteg in der Polöffnung voneinander getrennt sind, kann dieser Abstand auch kleiner sein, wie etwa weniger als 1.5 mm.

Gemäß einer Ausführungsform der Erfindung ist die Polöffnung V-förmig und/oder weist keinen Mittelsteg auf. Mit anderen Worten kann die Polöffnung für einen Pol zwei Einzelöffnungen umfassen, die von dem Mittelsteg voneinander getrennt sein. Alternativ dazu kann die Polöffnung eine V-förmige durchgehende Öffnung sein.

Eine Polöffnung ohne Mittelsteg kann einen Streufluss im Rotor reduzieren und damit den Wirkungsgrad bzw. das Drehmoment erhöhen. Weiter kann die Induktivität des Rotors in Umfangsrichtung reduziert werden, was zu einer Maximierung des Reluktanzmoments führen kann. Außerdem kann eine Entmagnetisierungsfestigkeit der Polmagnete bei Verbesserung deren Arbeitspunkts verbessert werden.

Gemäß einer Ausführungsform der Erfindung beträgt ein Verhältnis der radialen Dicke des Stegs zwischen der Polöffnung und einem Außenumfang des Rotors an seinem Rand in Umfangsrichtung und der Dicke des Stegs, bei der ein Polmagnet den Steg zu berühren beginnt, zwischen 0.7 und 1.2. Der Steg kann als die Trennwand zwischen Polöffnung und einem Außenumfang des Rotors aufgefasst werden. Bei einer V-förmigen Polöffnung ist dieser Steg in radiale Richtung unterschiedlich dick. Auch kann der Steg in einem Bereich der Polöffnung, der keinen Polmagnet enthält, unterschiedlich dick ausgestaltet sein, um die Drehzahlfestigkeit zu erhöhen. Das hier beschriebene Verhältnis bezieht sich auf die Dicke des Stegs am Rande der Öffnung und der Dicke des Stegs, wo ein Polmagnet den Steg zu berühren beginnt. Dieses Verhältnis führt insbesondere zu einer optimalen Drehzahlfestigkeit.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt einen Teilquerschnitt durch eine elektrische Maschine gemäß einer Ausführungsform der Erfindung.

Fig. 2 zeigt einen Ausschnitt aus Fig. 1.

Fig. 3 zeigt Diagramme, die das Optimieren der elektrischen Maschine aus den Fig. 1 und 2 illustrieren.

Die Figuren sind lediglich schematisch und nicht maßstabsgetreu. Gleiche Bezugszeichen bezeichnen in den Figuren gleiche oder gleichwirkende Merkmale.

Ausführungsformen der Erfindung

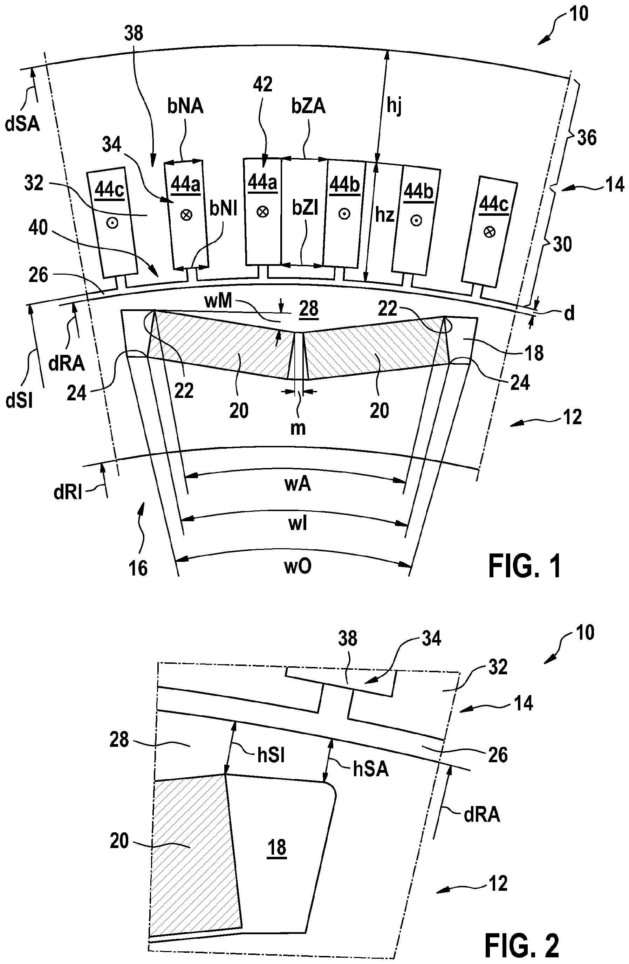

Fig. 1 zeigt einen Teilquerschnitt durch eine elektrische Maschine 10 mit einem Rotor 12, der innerhalb eines Stators 14 drehbar um eine Achse gelagert ist. Der Teilquerschnitt erstreckt sind über einen Pol 16 des Rotors 12. Der Pol 16 ist durch eine V-förmige Polöffnung 18 gekennzeichnet, in der zwei Polmagnete 20 aufgenommen sind. Die beiden Polmagnete 20 weisen einen rechteckigen Querschnitt auf und sind V-förmig zueinander orientiert.

Die beiden Polmagnete weisen einen geometrischen Versetzungswinkel wM von weniger als 15° auf. Der Versetzungswinkel wM der beiden Polmagnete 20 ist dabei der Winkel, um den die beiden Magnete jeweils zueinander verdreht sind, um zusammen ein V zu bilden. Zusammen sind die beiden Polmagnete um 2*wM versetzt.

In der Fig. 1 sind weiter die radial äußere Polabdeckung wA, die radial innere Polabdeckung wI und die Öffnungsüberdeckung wO eingezeichnet, die alle als geometrische Winkel angegeben werden können.

Die äußere Polbedeckung wA kann mit dem axialen geometrischen Winkel zwischen radial äußeren in Umfangsrichtung außen liegenden Kanten 22 der Polmagnete 20 bestimmt werden. Erfindungsgemäß beträgt die äußere Polabdeckung wA zwischen 123.5°el. und 142.9°el. Der Winkel ist dabei in elektrischen Grad (°el) angegeben, der ihn unabhängig von der Anzahl der Pole 16 des Rotors 12 macht. Konkret wird ein elektrischer Winkel $w_{el}$ wie folgt aus dem geometrischen bzw. mechanischen Winkel $w_{mech}$ und der Polzahl p bestimmt:

$$w_{el} = w_{mech} * p/2$$

Die innere Polbedeckung wI kann mit dem axialen geometrischen Winkel zwischen radial innen und in Umfangsrichtung außen liegenden Kanten 24 der Polmagnete 20 bestimmt sein. Erfindungsgemäß beträgt die innere Polabdeckung wI zwischen 115.7°el. und 133.2°el.

Der minimale Abstand m zwischen den Polmagneten 20 in Umfangsrichtung beträgt optimalerweise weniger als 3 mm (auch wenn ein Mittelsteg vorhanden ist). Die in der Fig. 1 gezeigte Polöffnung 18 weist keinen Mittelsteg auf. In diesem Fall kann der Abstand m der Polmagnete 20 auch weniger als 1.5 mm betragen.

Die Fig. 2 zeigt einen Ausschnitt aus der Fig. 1 genauer, mit dem Parameter des Stegs 28, der die Polöffnung 18 von einem Luftspalt 26 trennt, der zwischen dem Rotor 12 und dem Stator 14 angeordnet ist. Gezeigt sind eine radiale Dicke hSA des Stegs 28 zwischen der Polöffnung 18 und einem Außenumfang des Rotors 12 am Rand des Stegs 28 bzw. der Polöffnung 28 in Umfangsrichtung und eine radiale Dicke hSI des Stegs 28, bei der ein Polmagnet 20 den Steg 28 zu berühren beginnt. Optimalerweise beträgt das Verhältnis hSA/hSI zwischen 0.7 und 1.2.

Mit Bezug auf die Fig. 1 weist der Stator in einem Zahnbereich 30 Zähne 32 auf, die zwischen sich Nuten 34 bilden. Die Zähne 32 werden von einem Jochbereich 36 gehalten und gehen mit ihrem Zahngrund 38 in den Jochbereich 36 über. An einem Zahnkopf 40, der dem Zahngrund 38 gegenüberliegt und in Richtung des Rotors 12 weist, sind die Zähne T-förmig ausgeführt, so dass sich für die Nuten 34 nahezu geschlossene Öffnungen durch den Stator 14 ergeben. Die Zähne 32 ohne Zahnkopf 40 weisen einen im Wesentlichen trapezförmigen Querschnitt auf. Die Nuten 34 weisen einen im Wesentlichen trapezförmigen oder rechteckigen Querschnitt auf.

In den Nuten 34 ist eine Statorwicklung 42 angeordnet, die drei Phasen 44a, 44b, 44c aufweist. Die Leiter der Statorwicklung 42 können bei einer Steckwicklung in die Nuten 34 gesteckt und an ihren Enden miteinander verbunden worden sein.

Wie in der Fig. 1 gezeigt, sind dem einen Pol 16 sechs Nuten 34 zugeordnet. Mit drei Phasen 44a, 44b, 44c ergibt sich für die elektrische Maschine eine Lochzahl von q=2. Erfindungsgemäß weist die elektrische Maschine eine Lochzahl q größer gleich 1 auf.

In der Fig. 1 sind folgende Parameter des Stators 14 eingezeichnet:

- die Zahnhöhe hz, d.h. der radiale Abstand vom Innendurchmesser dSI des Stators 14 zum Zahngrund 38 bzw. die radiale Höhe bzw. Dicke des Zahnbereichs 30,
- die Jochdicke hj, d.h. der radiale Abstand vom Zahngrund 38 zum Außendurchmesser dSA des Stators 14 bzw. die radiale Höhe oder Dicke des Jochbereichs 36,
- die Zahnbreite bZA am Zahngrund 38, d.h. radial am weitesten außen,
- die Zahnbreite bZI am Zahnkopf 40, d.h. radial am weitesten innen,
- die Nutbreite bNA am Zahngrund 38, d.h. radial am weitesten außen, und
- die Nutbreite bNI am Zahnkopf 40, d.h. radial am weitesten innen.

Für den Stator 14 gibt es zwei alternative Parametersätze, die zusammen mit den oben angegebenen Parametern für den Rotor 12 optimal sind:

Parametersatz I:

- Verhältnis hz/hj von Zahnhöhe zu Jochdicke: 0.959 - 1.126
- Verhältnis bZA/bNA von Zahnbreite zu Nutbreite am Zahngrund 38: 1.23 - 1.35
- Verhältnis bZI/bNI von Zahnbreite zu Nutbreite am Zahnkopf 40: 1.03 - 1.14
- Verhältnis hNA/hNI der Nutbreiten am Zahngrund 38 und am Zahnkopf 40: 0.9 - 1.1

Parametersatz II:

- Verhältnis hz/hj von Zahnhöhe zu Jochdicke: 1.395 - 1.6376
- Verhältnis bZA/bNA von Zahnbreite zu Nutbreite am Zahngrund 38: 1.33 - 1.47

- Verhältnis bZI/bNI von Zahnbreite zu Nutbreite am Zahnkopf 40: 1.06 - 1.19
- Verhältnis hNA/hNI der Nutbreiten am Zahngrund 38 und am Zahnkopf 40: 0.9 - 1.1

Die Parameter können beispielsweise mit einem Statoraußendurchmesser dSA zwischen 110 mm und 500 mm realisiert werden.

Das Verhältnis dSI/dSA des Innendurchmessers dSI zu dem Außendurchmesser dSA des Stators kann optimalerweise zwischen 0.75 und 0.85 betragen.

Außerdem hat sich ein optimales Verhältnis d/DSI von der Dicke des Luftspalts d zum Innendurchmesser dSI des Stators 14 zwischen 0.0025 und 0.0055 ergeben.

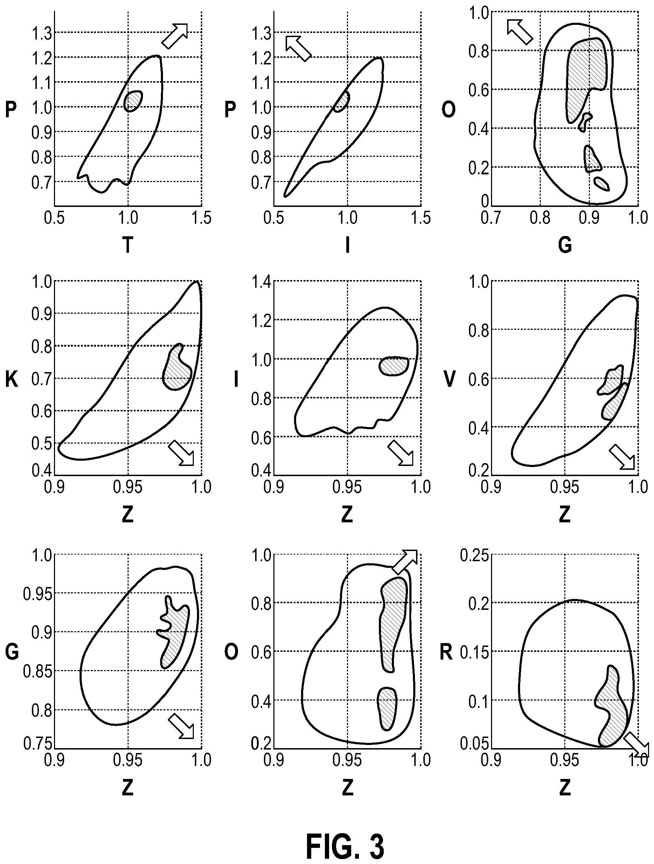

Die Fig. 3 zeigt die Ergebnisse einer Multi-Ziel-Optimierung, die zu den oben genannten Parameter-Kombinationen führt. Die Fig. 3 enthält Diagramme, bei denen jedes je zwei Zielwerte der elektrischen Maschine 10 zeigt. Wichtig ist, dass die oben genannten geometrischen Parameter die elektrische Maschine definieren, während bei der Multi-Ziel-Optimierung Optimierungsparameter optimiert werden, die von den geometrischen Parametern beeinflusst werden.

Jeder multidimensionale Punkt, der durch die beiden Optimierungsparameter der Diagramme definiert ist, kann damit als eigenes Design einer elektrischen Maschine aufgefasst werden. Mittels eines rekursiven Optimierungsalgorithmus wird von einem Punkt ausgegangen und werden dann weitere optimalere Punkte gesucht. Alle durch den Algorithmus betrachteten Punkte sind in den Diagrammen als umrandete Fläche eingezeichnet.

Der Pfeil in jedem der Diagramme zeigt, wo sich das optimale Design bezüglich der beiden Optimierungsparameter, die in dem Diagramm aufgetragen sind, befinden würde. Dieser Punkt kann jedoch bei sich gegenseitig widersprechenden Einzelzielen nicht erreicht werden. Es kann lediglich ein relatives Optimum aller Optimierungsziele ermittelt werden. Die Punkte in der schraffierten Fläche stellen Sätze von Optimierungsparametern dar, bei denen alle Optimierungsparameter möglichst optimal sind. Aus diesen optimalen Optimierungsparametern wurden dann die Intervalle für die oben genannten geometrischen Parameter für die elektrische Maschine 10 abgeleitet.

Folgende Optimierungsparameter sind dargestellt und wurden optimiert:

- Das maximale Drehmoment T muss maximiert werden.
- Die maximale Leistung P muss maximiert werden.
- Der Kurzschlussstrom I muss minimiert werden.
- Der Geräuschpegel G muss minimiert werden.
- Die Tonalität O muss maximiert werden.
- Der Zykluswirkungsgrad Z muss maximiert werden.
- Die Materialkosten K müssen minimiert werden.
- Die Verluste V müssen minimiert werden.

- Das Drehmomentripple R muss minimiert werden.

Der Zykluswirkungsgrad Z ist wichtig für Hybrid- und Elektrofahrzeuge, da er einen direkten Einfluss auf die Reichweite hat.

Alle angegebenen Parameter sind auf einen vorgegebenen Maximalwert normiert.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

**Patentansprüche**

1. Elektrische Maschine (10) zum Antrieb eines Fahrzeugs, umfassend:

   - einen Stator (14) mit axial verlaufenden, gleichmäßig um eine Achse der elektrischen Maschine (10) verlaufenden Statornuten (34), durch die eine Statorwicklung (42) verläuft; wobei die elektrische Maschine (10) eine Lochzahl von größer gleich 1 aufweist,
   wobei bei dem Stator (14):

      - ein Verhältnis von Zahnhöhe (hz) zu Jochdicke (hj) zwischen 0.959 und 1.126 beträgt, ein Verhältnis von Zahnbreite (bZA) zu Nutbreite (bNA) am Zahngrund (38) zwischen 1.23 und 1.35 beträgt, ein Verhältnis von Zahnbreite (bZI) zu Nutbreite (bNI) am Zahnkopf (40) zwischen 1.03 und 1.14 beträgt, ein Verhältnis von Nutbreite (bNA) am Zahngrund (38) zu Nutbreite (bNI) am Zahnkopf (40) zwischen 0.9 und 1.1 beträgt; oder
      - ein Verhältnis von Zahnhöhe (hz) zu Jochdicke (hj) zwischen 1.395 und 1.6376 beträgt, ein Verhältnis von Zahnbreite (bZA) zu Nutbreite (bNA) am Zahngrund (38) zwischen 1.33 und 1.47 beträgt, ein Verhältnis von Zahnbreite (bZI) zu Nutbreite (bNI) am Zahnkopf (40) zwischen 1.06 und 1.19 beträgt, ein Verhältnis von Nutbreite (bNA) am Zahngrund (38) zu Nutbreite (bNA) am Zahnkopf (40) zwischen 0.9 und 1.1 beträgt, wobei
      - die Zahnhöhe (hz) eine radiale Höhe ist, über die sich die Zähne erstrecken, wobei die Jochdicke (hj) eine radiale Höhe eines Jochs des Stators ist, wobei der Zahngrund sich am Übergang zwischen den Zähnen und dem Joch befindet,

      - einen Rotor (12) mit axial verlaufenden Polen (16), der innerhalb des Stators (14) um die Achse der elektrischen Maschine (10) drehbar gelagert ist,
   wobei in jedem Pol (16) des Rotors (12) zwei Polmagnete (20) mit rechteckigem Querschnitt in einer axial verlaufenden Polöffnung (18) V-förmig zueinander angeordnet sind, wobei ein geometrischer Versetzungswinkel (wM), um den die beiden Polmagnete (20) ausgehend von einer Anordnung der beiden Polmagnete (20) auf einer Linie jeweils zueinander verdreht sind, um zusammen ein V zu bilden, weniger als 15° beträgt; wobei
   der elektrische Winkel der äußeren Polbedeckung (wA) zwischen 115.7°el. und 133.2°el. beträgt; wobei
   der elektrische Winkel der inneren Polbedeckung (wl) zwischen 123.5°el. und 142.9°el. beträgt;
   wobei ein elektrischer Winkel als ein geometrischer Winkel multipliziert mit der Hälfte einer Anzahl der Pole (16) des Rotors (12) bestimmt ist;
   - wobei die äußere Polbedeckung (wA) durch einen axialen geometrischen Winkel bestimmt ist, den die beiden Polmagnete (20) an einer radial außen liegenden Seite der Polöffnung (18) überdecken; wobei die äußere Polbedeckung (wA) durch den geometrischen Winkel zwischen den in Umfangsrichtung außen liegenden, an der radial außen liegenden Seite der Polöffnung (18) liegenden Kanten der beiden Polmagnete (20) bestimmt ist,
   - wobei die innere Polbedeckung (wl) durch einen axialen geometrischen Winkel bestimmt ist, den die beiden Polmagnete (20) an einer radial innen liegenden Seite der Polöffnung (18) überdecken, wobei die innere Polbedeckung (wl) durch den geometrischen Winkel zwischen den in Umfangsrichtung außen liegenden, an der radial innen liegenden Seite der Polöffnung (18) liegenden Kanten der beiden Polmagnete (20) bestimmt ist.

2. Elektrische Maschine (10) nach Anspruch 1, wobei der Statoraußendurchmesser (dSA) zwischen 110 und 500 mm beträgt.

3. Elektrische Maschine (10) nach einem der vorhergehenden Ansprüche, wobei ein Verhältnis vom Innendurchmesser (dSI) zum Außendurchmesser (dSA) des Stators (14) zwischen 0.75 und 0.85 beträgt.

4. Elektrische Maschine (10) nach einem der vorhergehenden Ansprüche, wobei ein Verhältnis zwischen einer Breite (d) eines Luftspalts (26) zwischen dem Stator (14) und dem Rotor (12) und dem Innendurchmesser (dSI) des Stators (14) zwischen 0.0025 und 0.0055 beträgt.

5. Elektrische Maschine (10) nach einem der vorhergehenden Ansprüche,
wobei ein Abstand (m) in Umfangsrichtung zwischen zwei Polmagneten (20) eines Pols (16) weniger als 3.0 mm beträgt.

6. Elektrische Maschine (10) nach einem der vorhergehenden Ansprüche,
wobei die Polöffnung (18) V-förmig ist und keinen Mittelsteg aufweist.

7. Elektrische Maschine (10) nach einem der vorhergehenden Ansprüche,
wobei zwischen der Polöffnung (18) und einem Außenumfang des Rotors (12) ein Steg (28) vorgesehen ist, wobei der Steg (28) in Umfangsrichtung gesehen an seinem Rand eine radiale Dicke (hSA) und an der Stelle, bei der ein Polmagnet (20) den Steg (28) zu berühren beginnt, eine Dicke (hSI) aufweist, wobei ein Verhältnis der radialen Dicke (hSA) des Stegs (28) und der Dicke (hSI) des Stegs (28) zwischen 0.7 und 1.2 beträgt.

**Claims**

1. Electrical machine (10) for driving a vehicle, comprising:

   - a stator (14) having stator grooves (34) running axially, and running uniformly around an axis of the electrical machine (10), through which grooves a stator winding (42) runs; wherein the electrical machine (10) has a slot number greater than or equal to 1,
   wherein the stator (14):

     - has a ratio of the tooth height (hz) to the yoke thickness (hj) between 0.959 and 1.126; has a ratio of the tooth width (bZA) to the groove width (bNA) at the tooth gullet (38) between 1.23 and 1.35; has a ratio of the tooth width (bZI) to the groove width (bNI) at the tooth tip (40) between 1.03 and 1.14; has a ratio of the groove width (bNA) at the tooth gullet (38) to the groove width (bNI) at the tooth tip (40) between 0.9 and 1.1; or
     - has a ratio of the tooth height (hz) to the yoke thickness (hj) between 1.395 and 1.6376; has a ratio of the tooth width (bZA) to the groove width (bNA) at the tooth gullet (38) between 1.33 and 1.47; has a ratio of the tooth width (bZI) to the groove width (bNI) at the tooth tip (40) between 1.06 and 1.19; has a ratio of the groove width (bNA) at the tooth gullet (38) to the groove width (bNA) at the tooth tip (40) between 0.9 and 1.1, wherein

   - the tooth height (hz) is a radial height over which the teeth extend, wherein the yoke thickness (hj) is a radial height of a yoke of the stator, wherein the tooth gullet is located at the transition between the teeth and the yoke,

   - a rotor (12) with axially oriented poles (16), which rotor is mounted inside the stator (14) for rotation about the axis of the electrical machine (10), wherein two pole magnets (20) of rectangular cross-section are arranged in each pole (16) of the rotor (12) in an axially oriented pole opening (18), forming a V in respect of one another, wherein
   a geometrical offset angle (wM), through which the two pole magnets (20), starting from an arrangement of the two pole magnets (20) in a line, are in each case rotated in relation to one another such that, in combination, they constitute a V-shape, is less than 15°; wherein
   the electrical angle of the outer pole coverage (wA) lies between 115.7°el and 133.2°el; wherein
   the electrical angle of the inner pole coverage (wI) lies between 123.5°el and 142.9°el;
   wherein an electrical angle is determined as a geometrical angle multiplied by one half of the number of poles (16) of the rotor (12);
   - wherein the outer pole coverage (wA) is determined by an axial geometrical angle which the two pole magnets (20) cover on a radially outer side of the pole opening (18); wherein the outer pole coverage (wA) is determined by the geometrical angle between the edges, that are circumferentially on the outside and are on the radially outer side of the pole opening (18), of the two pole magnets (20),
   - wherein the inner pole coverage (wI) is determined by an axial geometrical angle which the two pole magnets (20) cover on a radially inner side of the pole opening (18), wherein the inner pole coverage (wI) is determined by the geometrical angle between the edges, that are circumferentially on the outside and are on the radially inner side of the pole opening (18), of the two pole magnets (20).

2. Electrical machine (10) according to Claim 1, wherein the external diameter of the stator (dSA) lies between 110 and 500 mm.

3. Electrical machine (10) according to either of the preceding claims,
wherein a ratio of the internal diameter (dSI) to the external diameter (dSA) of the stator (14) lies between 0.75 and 0.85.

4. Electrical machine (10) according to one of the preceding claims,
   wherein a ratio between a width (d) of an air gap (26) between the stator (14) and the rotor (12) and the internal diameter (dSI) of the stator (14) lies between 0.0025 and 0.0055.

5. Electrical machine (10) according to one of the preceding claims,
   wherein a clearance (m) between two pole magnets (20) in a pole (16), in the circumferential direction, is less than 3.0 mm.

6. Electrical machine (10) according to one of the preceding claims,
   wherein the pole opening (18) is V-shaped, and has no central web.

7. Electrical machine (10) according to one of the preceding claims,
   wherein a web (28) is provided between the pole opening (18) and an outer circumference of the rotor (12), wherein the web (28), as seen in the circumferential direction, has a radial thickness (hSA) at its edge and a thickness (hSI) at the point of initial contact between a pole magnet (20) and the web (28), wherein a ratio of the radial thickness (hSA) of the web (28) and the thickness (hSI) of the web (28) lies between 0.7 and 1.2.

**Revendications**

1. Machine électrique (10) destinée à entraîner un véhicule, comprenant :

   - un stator (14) doté d'encoches de stator (34) s'étendant axialement et s'étendant régulièrement autour d'un axe de la machine électrique (10), par lesquelles s'étend un enroulement de stator (42) ; la machine électrique (10) présentant un nombre de trous supérieur ou égal à 1, dans lequel, pour le stator (14) :

     - un rapport entre la hauteur de dent (hz) et l'épaisseur de culasse (hj) est compris entre 0,959 et 1,126, un rapport entre la largeur de dent (bZA) et la largeur d'encoche (bNA) sur le fond de dent (38) est compris entre 1,23 et 1,35, un rapport entre la largeur de dent (bZI) et la largeur d'encoche (bNI) à la tête de dent (40) est compris entre 1,03 et 1,14, un rapport entre la largeur d'encoche (bNA) sur le fond de dent (38) et la largeur d'encoche (bNI) à la tête de dent (40) est compris entre 0,9 et 1,1 ; ou
     - un rapport entre la hauteur de dent (hz) et l'épaisseur de culasse (hj) est compris entre 1,395 et 1,6376, un rapport entre la largeur de dent (bZA) et la largeur d'encoche (bNA) sur le fond de dent (38) est compris entre 1,33 et 1,47, un rapport entre la largeur de dent (bZI) et la largeur d'encoche (bNI) à la tête de dent (40) est compris entre 1,06 et 1,19, un rapport entre la largeur d'encoche (bNA) sur le fond de dent (38) et la largeur d'encoche (bNA) à la tête de dent (40) est compris entre 0,9 et 1,1, dans laquelle
     - la hauteur de dent (hz) est une hauteur radiale sur laquelle s'étendent les dents, l'épaisseur de culasse (hj) étant une hauteur radiale d'une culasse du stator, le fond de dent se trouvant à la jonction entre les dents et la culasse,
     - un rotor (12) doté de pôles s'étendant axialement (16) et qui est monté rotatif autour de l'axe de la machine électrique (10) à l'intérieur du stator (14), dans chaque pôle (16) du rotor (12), deux aimants polaires (20) à section transversale rectangulaire étant disposés en forme de V l'un par rapport à l'autre dans une ouverture de pôle (18) s'étendant axialement, dans laquelle

   un angle de décalage géométrique (wM) selon lequel les deux aimants polaires (20) sont tournés respectivement l'un par rapport à l'autre en partant d'une disposition des deux aimants polaires (20) sur une ligne afin de former un V ensemble, mesure moins de 15° ; dans laquelle
   l'angle électrique du recouvrement de pôle extérieur (wA) est compris entre 115,7° él. et 133,2° él. ; dans laquelle
   l'angle électrique du recouvrement de pôle intérieur (wI) est compris entre 123,5° él. et 142,9° él. ;
   un angle électrique étant déterminé comme un angle géométrique multiplié par la moitié d'un nombre des pôles (16) du rotor (12) ;
   - le recouvrement de pôle extérieur (wA) étant déterminé par un angle géométrique axial que recouvrent les deux aimants polaires (20) sur un côté, situé radialement à l'extérieur, de l'ouverture de pôle (18) ; le recouvrement de pôle extérieur (wA) étant déterminé par l'angle géométrique entre les arêtes des deux aimants polaires (20) situées à l'extérieur dans la direction circonférentielle, situées sur le côté, situé radialement à l'extérieur, de l'ouverture de pôle (18),
   - le recouvrement de pôle intérieur (wI) étant déterminé par un angle géométrique axial que recouvrent les deux aimants polaires (20) sur un côté, situé radialement à l'intérieur, de l'ouverture de pôle (18), le recouvrement de pôle intérieur (wI) étant déterminé par l'angle géométrique entre les arêtes des deux aimants polaires (20) situées à l'extérieur dans la direction circonférentielle, situées sur le côté, situé radialement à l'intérieur, de l'ouverture de pôle (18).

2. Machine électrique (10) selon la revendication 1, dans laquelle le diamètre extérieur de stator (dSA) mesure entre 110 et 500 mm.

3. Machine électrique (10) selon l'une quelconque des revendications précédentes, dans laquelle un rapport entre le diamètre intérieur (dSI) et le diamètre extérieur (dSA) du stator (14) est compris entre 0,75 et 0,85.

4. Machine électrique (10) selon l'une quelconque des revendications précédentes, dans laquelle un rapport entre une largeur (d) d'un entrefer (26) entre le stator (14) et le rotor (12) et le diamètre intérieur (dSI) du stator (14) est compris entre 0,0025 et 0,0055.

5. Machine électrique (10) selon l'une quelconque des revendications précédentes, dans laquelle une distance (m) dans la direction circonférentielle entre deux aimants polaires (20) d'un pôle (16) mesure moins de 3,0 mm.

6. Machine électrique (10) selon l'une quelconque des revendications précédentes, dans laquelle l'ouverture de pôle (18) est en forme de V et ne présente aucune nervure centrale.

7. Machine électrique (10) selon l'une quelconque des revendications précédentes, dans laquelle une nervure (28) est prévue entre l'ouverture de pôle (18) et une circonférence extérieure du rotor (12), la nervure (28), vue dans la direction circonférentielle, présentant au niveau de son bord une épaisseur radiale (hSA) et à l'endroit où l'aimant polaire (20) commence à toucher la nervure (28) une épaisseur (hSI), un rapport entre l'épaisseur radiale (hSA) de la nervure (28) et l'épaisseur (hSI) de la nervure (28) étant compris entre 0,7 et 1,2.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012219174 A1
- EP 2498375 A1
- WO 2006095887 A1
- DE 102015203012 A1
- JP 2008306849 A